# EUROPEAN PATENT SPECIFICATION

(11) **EP 1 906 772 B1**
(45) Date of publication and mention of the grant of the patent: **08.07.2015**
(21) Application number: 06747776.0
(22) Date of filing: 12.05.2006
(51) Int. Cl.: A01G 7/04, A23L 1/216, A23B 7/015

(54) **POTATO TREATMENT**
BEHANDLUNG VON KARTOFFELN
TRAITEMENT DE POMMES DE TERRE

(30) Priority: 12.05.2005 SE 0501137; 26.05.2005 US 684555 P
(43) Date of publication of application: 09.04.2008
(73) Proprietor: Estrella Maarud Holding AS, Oslo (NO)
(72) Inventor: LINDGREN, Martin, 148 40 Segersäng (SE)
(74) Representative: Becker Kurig Straus
(86) International application number: PCT/SE2006/000557
(87) International publication number: WO 2006/121397

(56) References cited:
- WO-A1-01/97636
- WO-A1-2004/055219
- WO-A1-2005/123967
- DE-C2- 10 144 479
- US-A- 4 723 483
- US-A- 4 787 303
- US-A- 5 549 041
- US-A- 5 662 031
- US-A- 6 077 479
- US-A1- 2004 166 019
- US-A1- 2004 238 348
- ESHTIAGHI M N ET AL: "High electric field pulse pretreatment: potential for sugar beet processing.", JOURNAL OF FOOD ENGINEERING 2002 DEP. OF FOOD BIOTECH. & FOOD PROCESS ENG., BERLIN UNIV. OF TECH., BERLIN D-14195, GERMANY. TEL. +49 3031 471250. FAX +49 3083 27663. E-MAIL FOODTECH@MAILSZRZ.ZRZ.TU-BERLIN.DE LNKD- DOI:10.1016/S0260-8774(01)00114-5, vol. 52, no. 3, 2002, pages 265-272, XP002635072, DOI: 10.1016/S0260-8774(01)00114-5
- PRAPORSCIC I ET AL: "Ohmically Heated, Enhanced Expression of Juice from Apple and Potato Tissues", BIOSYSTEMS ENGINEERING, ACADEMIC PRESS, UK, vol. 93, no. 2, 1 February 2006 (2006-02-01), pages 199-204, XP024970556, ISSN: 1537-5110, DOI: DOI:10.1016/J.BIOSYSTEMSENG.2005.11.002 [retrieved on 2006-02-01]
- DATABASE WPI Week 198324, Derwent Publications Ltd., London, GB; Class D14, AN 1983-58001K, XP003003196 & SU 946 491 B (AS MOLD APPL PHYS) 30 July 1982
- DATABASE WPI Week 198122, Derwent Publications Ltd., London, GB; Class D17, AN 1981-39807D, XP003003197 & SU 764 643 B (AS MOLD APPL PHYS) 23 September 1980
- DATABASE WPI Derwent Publications Ltd., London, GB; Class D14, AN 1991-258306, XP003003198 & SU 1 614 785 A (TASHK AGRIC IRRIG) 23 December 1990
- DATABASE WPI Week 197933, Derwent Publications Ltd., London, GB; Class D17, AN 1979-61135B, XP003003199 & SU 631 137 A (KIEV FOOD IND TECH) 10 November 1978

## Description

### Technical Field

The present invention relates to a method for continuous treatment of potatoes with an electrical field to produce holes (pores) in the cell membranes which is known as electroporation. The electroporation process will enhance mass transfer of reducing sugars in said potatoes.

### Background of the invention

In the process of preparing deep-fried potato products such as chips and French fries, the conventional process comprise several treatment steps; a cleaning step, where all foreign material attached during harvesting are removed; a peeling step, where the potato skin is removed; a slicing step, where the potatoes are cut or sliced into the desired shape; a blanching step, comprising washing and preheating where the slices are washed and most of the starch and reducing sugars released during the slicing step and present on the surface of the slices, are removed; and finally the frying step where the actual cooking in oil takes place.

The washing/blanching step is a large user of both water and energy at the plant. During the growth of the potato, sugars in the potato are converted to starch and in a mature potato the sugar level is normally below 2 %, but differs greatly between varieties. These starches can revert back to sugar if the potato is not stored or transported properly after the harvest. Potatoes which contain high levels of sugar produce brown potato chips which are considered undesirable by consumers. Another reason to keep the content of reducing sugars low in the potato product to be used in frying is the propensity of sugars to form acrylamide in the presence of the amino acid asparagine and high temperatures. In order to reduce the amount of sugar some potato chip manufacturers wash or blanch their raw chip slices in hot water (80 °C to boiling). This method will result in lighter color chips by removing some of the sugars and inactivating some enzymes causing off- flavors or off-colors. However, this treatment will in addition to the sugars, leach any soluble material, such as for example minerals and starch from the slices, resulting in some loss in crispiness and flavor, while increasing oil absorption in the chip. The wastewater generated from the blancher causes problems when released into the sewage system as it has an extremely high starch content (each 100 tons of processed potatoes produce approximately 2-3 tons of starch). As the water is heated at the blanching step the starch tends to swell and gelatinize and clog the sewage system. The amount of waste will increase as the water trapped in the gelatinized starch is difficult to release.

Thus, it would be beneficial to both the finished potato product and the wastewater sewage system if the release of internal substances from the potato cell walls could be controlled in some way. US patent 6,405,948 discloses a method for liberating intracellular matter from biological material having cells with cell walls, wherein the cell walls are subjected to rapid pressure increases and decreases, exceeding the elastic limits of the cell walls, thereby opening the cell walls and liberating the intracellular material from the cells. The intracellular material and cell wall fragments are separated further. One way of introducing substances into biological cells is the technique electroporation known to the molecular biologist, whereby DNA is physically introduced into a cell. A cell suspension is placed in the cuvette and a solution of DNA fragments containing the gene of interest is added. A direct current pulse is discharged in the cuvette suspension. The DC pulse is thought both to disrupt temporarily the membrane and to electrophorese DNA directly into cells. The cells are put in culture and assayed after various times for the acquired characteristics introduced by the DNA fragment.

The US Patent 5,690,978 by Yin et al.1997 discloses a pulse electric field (PEF) treatment chamber used for the inactivation of bacterial spores in liquid food products. Each electrode includes an electrode flow chamber for making electrical contact with the pumpable food product and for allowing the pumpable food product to flow through the treatment device. The insulator is situated between the electrodes and includes an insulator flow chamber positioned between the electrode flow chambers and provides for the flow of pumpable food product from one electrode flow chamber to the other. A high voltage pulse generator applies a high voltage signal of variable voltage, frequency and pulse duration to the electrodes.

WO 2004/055219 discloses a process for removing materials from sugar beet or sugar cane.

WO 2005/123967 and the article of Eshtiaghi et.al."High electric field pulse treatment: potential for sugar beet processing", in Journal of Food Engineering, 2002, vol. 52, no. 3, pages 265-272, describe principally the removal of materials from sugar beets.

WO 01/97636 teaches a pretreatment of potatoes for french fries with DC (45-65 V/cm). The use of pulse electric fields are not described.

DE 10 144 479 C2 describes principally the treatment of sugar beet. The pulse voltage may be up to several hundred kV.

US 2004/0166019 discloses electroporation techniques for pasteurizing food stuffs. Reference is made to plants, roots, knots, fruits and animal cells.

US 3,997,678 A discloses a process of preparing deep-fried potato products such as chips or french fries wherein the conventional blanching step comprises washing and pre-heating before the actual cooking. In the blanching step the cut potato products are submersed in water and subjected to passage of electric current of 50-60 cycles per second supplied to water by the means of electrodes immersed therein.

### Summary of the invention

The present invention relates to a method for continuous treatment of potatoes with an electrical field to produce holes (pores) in the cell membranes which is known as electroporation. The electroporation process will enhance mass transfer of reducing sugars in said potatoes.

A first aspect of the present invention, provides a process for treating potatoes, comprising the steps of:
- applying an electric field in the form of a pulsed electric field to the potatoes, using such a field strength that pores are created in the cell membranes of potatoes, enhancing the rate of mass transfer of reducing sugars from said potatoes, and
- removing said reducing sugars from the potatoes by washing in a liquid at low temperatures wherein the liquid in the washing step 103 is water or a solution of salt in water and wherein the temperature of the liquid in the washing step 103 is below 70°C.

The invention relates to the above process when the applied electric field is a pulsed electric field in the form of rectangular (exponential) mono polar (bipolar) pulses and; the rectangular (exponential) mono polar (bipolar) pulses are in a preferred range of 0.2- 10 kV/cm, more preferably 0.5-3.0 kV/cm, and most preferably on the order of 1.2 kV/cm, and; the number of pulses applied is preferably from 1-500, more preferably 2-100 and most preferably 50, and; the duration of the pulses applied is 2-500 microseconds, more preferably 5-150 and most preferably 10 microseconds, and; the repetition rate for the applied pulses is 10 - 500 Hz, more preferably 50-200 and most preferably 100 Hz, and; the total energy applied by the pulses is 0.01 - 5.0 kJ/kg), more preferably 0.1-1.0 kJ/kg and most preferably 0.4 kJ/kg, and; the conductivity of the plant cellular material suspension is 0.01 - 0.10 S/m, more preferably 0.02-0.08 S/m and most preferably 0.04 S/m, and; the electric field strength applied on the two electrodes is of the order of 0.2-10 kV/cm, more preferably 0.5 - 3.0 kV/cm, and most preferably on the order of 1.2 kV/cm and; the ratio of potatoes/potato slices to liquid going through the treatment chamber is in the range of 1 :1-1 :20, more preferably 1 :8-1 :12, and most preferably 1:10, and the flow of potatoes/potato slices to liquid going through the treatment chamber is in the range of 1 to 60 tonnes an hour, more preferably 20 to 40, and most preferably 36 tonnes an hour.

The liquid in the washing step is water or a solution of salts in water, where; the temperature of the water or liquid in the washing step is below 70 °C, more preferably below 60 °C, and most preferably below 46 °C, and; the duration of the washing step is less than 30 minutes, more preferably less than 10 minutes and most preferably less than 5 minutes.

The process wherein the transfer rate to the potatoes is enhanced and supplies an enzyme enhancing substance, such as calcium ions.

A device for the electroporation of potatoes material can comprise: - a treatment chamber; - a pulse generator; - at least two electrodes; at least wherein said treatment chamber is arranged to receive potatoes material in solid phase transported, with or without a liquid transport carrier, past at least two electrodes, where the pulse generator is arranged to apply a pulsed electric field enhancing to said potatoes the rate of mass transfer of reducing sugars from said potatoes,
wherein the pulse generator is arranged to apply an electric field in the range of 0.2-10 kV/cm, and to apply pulses in the range from 1-500, wherein the duration for the pulses applied is 2-500 microseconds, and the repetition rate for the pulses applied is 10-500 Hz, at least one insulator position between the electrodes.

The device wherein the length of the insulator positioned between the electrodes is 2 to 50 cm, more preferably 10 to 35, and most preferably 24 cm.

The device wherein the diameter of the treatment chamber is 1 to 20 cm, more preferably 8 to 13 cm, and most preferably 12 cm.

A device wherein the treatment chamber comprises a rotating drum with at least one opening on the periphery of the drum with a sharp edge for cutting or slicing objects passing through the opening and wherein the at least two electrodes each are positioned adjacent to an opening side. The device wherein one electrode forms the sharp edge.

The device wherein the electrodes are formed circumferentially on the treatment chamber outer periphery.

The device wherein a conveyor belt transports the potatoes plant cellular material.

The device wherein a triggering device is positioned so as to detect a presence of the potatoes plant cellular material at a position for treatment.

The device wherein one electrode is at a ground potential.

The device wherein the treatment chamber further comprises safety ground electrodes at two ends of the treatment chamber.

A potato product treated in accordance with the process described above.

These and other aspects of the invention will be apparent from and elucidated with reference to the embodiments described hereinafter.

### Brief description of the figures

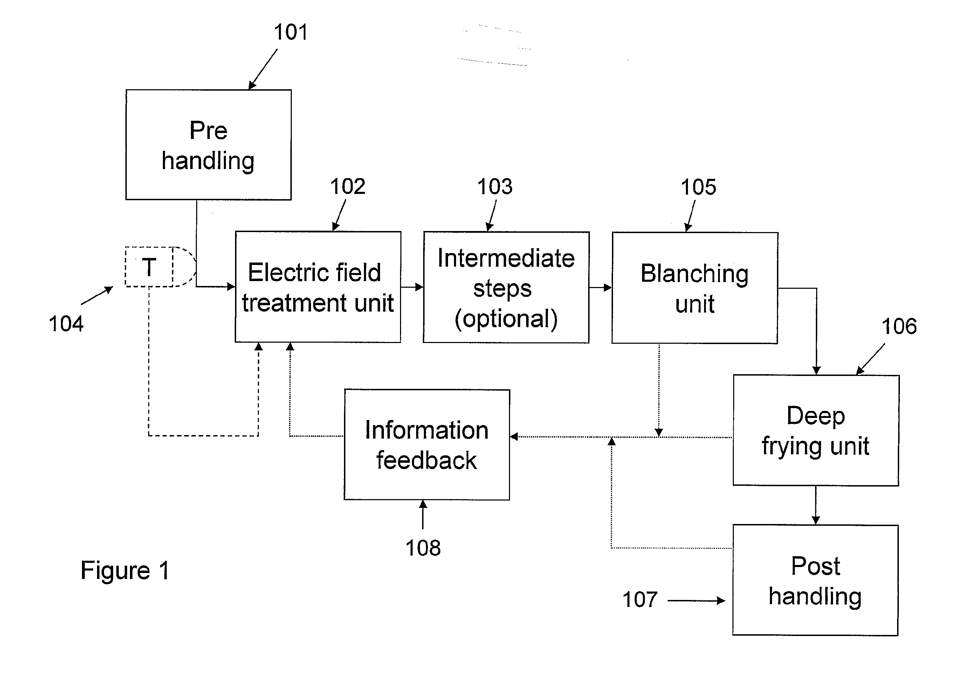

In the following the invention will be described in a non-limiting way and in more detail with reference to exemplary embodiments illustrated in the enclosed drawings, in which: Figure 1 is an overview of the basic steps where the present invention is applied to potato chip processing.
Figure 2 is a treatment chamber (electrode configuration) according to the present invention.
Figure 3 is a detail of the treatment chamber described in figure 2. Figure 4 is a treatment chamber according to the present invention of round (or rectangular, not shown) cross-section with internal electrodes.
Figure 5 is a treatment chamber according to the present invention made of two side mounted electrodes and a conveyor belt submerged in water.
Figure 6 is a treatment chamber according to the present invention made of one top mounted high voltage electrode and a conveyor belt serving as a ground electrode.
Figure 7 is a treatment chamber according to the present invention made of a flexible tube with inserts of electrodes.
Figure 8 is a rotating treatment chamber according to the present invention.

### Detailed description of the invention

The present invention will be described in relation to potatoes.

The term potato product is herein intended to comprise potato products such as French fries, potato chips, potato crisps.

In the present invention a washed and peeled, raw, sliced or whole potato undergoes a treatment method (Figure 1) wherein an alternating electric field is applied 102. The alternating electric field may comprise pulses or other shapes. The present invention includes the steps of transporting the potatoes through a PEF (pulsed electric field) treatment device 200 so as to create a flow of potatoes, one or several at the same time through the device, generating a pulsed electric field, and subjecting the pulsed electric field to the potatoes. The applied electric field is in an ideal shape of, but not limited to, rectangular mono polar pulses of electric fields in a preferred range of 0.2 - 10 kV/cm, more preferably 0.5 - 3.0 kV/cm, and most preferably on the order of 1.2 kV/cm. However, it should be understood by the person skilled in the art that due to practical implications in the electrical setup, the shape will be slightly distorted (e.g. non- rectangular with slightly distorted edges). Other embodiments of this invention may use exponential decay pulses, continuous sinus exposure, in the mono or bipolar form. Each object is subjected to a number of pulses where the number of pulses is preferably from 1 - 500, more preferably 2-100, and most preferably 50 with a preferred pulse duration of 2 - 500 microseconds, more preferred duration of 5 - 150 microseconds, and most preferred 10 microseconds, at a preferred pulse repetition rate of 10 - 500 Hz, more preferred 50 - 200 Hz, and most preferred 100 Hz. The total energy delivered to the potato suspension is preferably 0.01 - 5.0 kJ/kg, more preferably 0.1 - 1.0 kJ/kg, and most preferred 0.4 kJ/kg. In a suitable arrangement, it is possible to use supplied alternating currents directly without transformation and/or reshaping into pulses, i.e. the supply voltage (e.g. 50 Hz 240 Volts or 60 Hz 110 Volts) can directly drive electrodes.

The application of an electric field to the potato creates holes (pores) in the cell membranes of the potato, enhancing the transfer rate of molecular substances in general. This process, called electroporation, facilitates or enables the extraction of intracellular substances from the cells. By fine tuning the electroporation process (e.g. applying the optimal amount of pulses of optimal energy and duration) pores of an optimal size may be created, making the cell membranes act as "molecular sieves" keeping large molecules such as starch on the inside of the cells, while smaller molecules such as e.g. reducing sugars, diffuse through the enlarged pores and easily be washed off in a subsequent washing step103.

Due to the reduced amount of released starch, it is possible to use starch rich potatoes, which is difficult using conventional techniques available today. Such starch rich potatoes are less expensive than other types of potatoes and therefore this is of advantage for the industry.

Electroporation may also facilitate the migration of molecular substances into the cells. Such molecular substances may come from the processing transportation/washing liquid and be added ions, for example Calcium ions. Calcium ions improve the activity of the enzyme pectin-methyl-esterase (PME) which is an enzyme inducing pectin structures leading to an improved crispiness of the final product.

In the case where the electroporation treatment is applied to whole raw potatoes, before the slicing/cutting step, the potato can be sliced with less effort and wear of knives, leaving smother cutting surfaces with less internal cracks than during the regular cutting/slicing process. Cutting and slicing potatoes induce a quality degrading release of starch granules from the injured potato cells on the cut surface. It also induces quality degrading enzymatic reactions leading to discoloration etc. An advantage of applying the electroporation treatment step before the cutting is that less of these reactions are induced due to less mechanical stress.

This extraction, and/or a possible migration into or out from the cells during the electroporation treatment, can be implemented at such temperatures that the rate of change of molecular structure or rate of any chemical or enzymatic reactions, involving the targeted substances or processed potato can be reduced or avoided. For example, starch granules are insoluble in cold water but start to hydrate and gelatinize in water at temperatures above 60-70 °C. Thus, due to the low temperatures generated in the electroporation process it is possible to greatly reduce the amount of process water due to the absence of formation of gelatinized starch and the washing step is performed at temperatures preferably below 70 °C more preferably below 60 °C, and most preferably below 46 °C. The electroporation process has a further advantage in that it allows a shortening of the time, and/or lowering of the temperature in the optional subsequent blanching step 104 as the mass transfer rate is increased in general.

In the subsequent frying step 105, a certain amount of water needs to be extracted from the potato product in order to obtain the optimal crispiness of the final product. An advantage of the present invention is that it reduces the time required to extract the necessary amount of water from the potato slices in a deep frying unit in order to reach this optimal crispiness. It may also make it easier for the oil to leave the deep fried potato product. The electroporation process can be controlled through a feedback system 107 ensuring product quality, e.g. the chip colour after deep frying depends on the concentration of trapped reducing sugars (glucose, fructose) inside the potato cells, which may be controlled using this process. The concentration of starch in the waste water may be measured and controlled as may the concentration of acrylamide (by for instance amino acids or reducing sugars), fat content, hardness, or crispiness of the potato chips.

The cleaned potatoes which are, peeled or unpeeled 101, uncooked, whole or sliced, will primarily be transported into the treatment chamber one by one, or several at the time submerged in water or other suitable liquid (e.g. salt solution). The transportation of potatoes in a liquid will simultaneously serve as part of the washing/blanching step. The liquid used to transport the whole or sliced potatoes through the treatment chambers will extract and remove the molecular substances (e.g. reducing sugars) released from the cells and surfaces of the potato. This washing/blanching step is performed at temperatures preferably below 70 °C, more preferably below 60 °C, and most preferably below 46 °C and has a duration of preferably less than 30 minutes, more preferably less than 10 minutes and most preferably less than 3 minutes. The washing step can be followed by an optional blanching step at temperatures preferably below 70 [deg.]C, more preferably below 60 °C, and most preferably below 46 °C but may optionally be executed at higher temperatures (> 80°C).

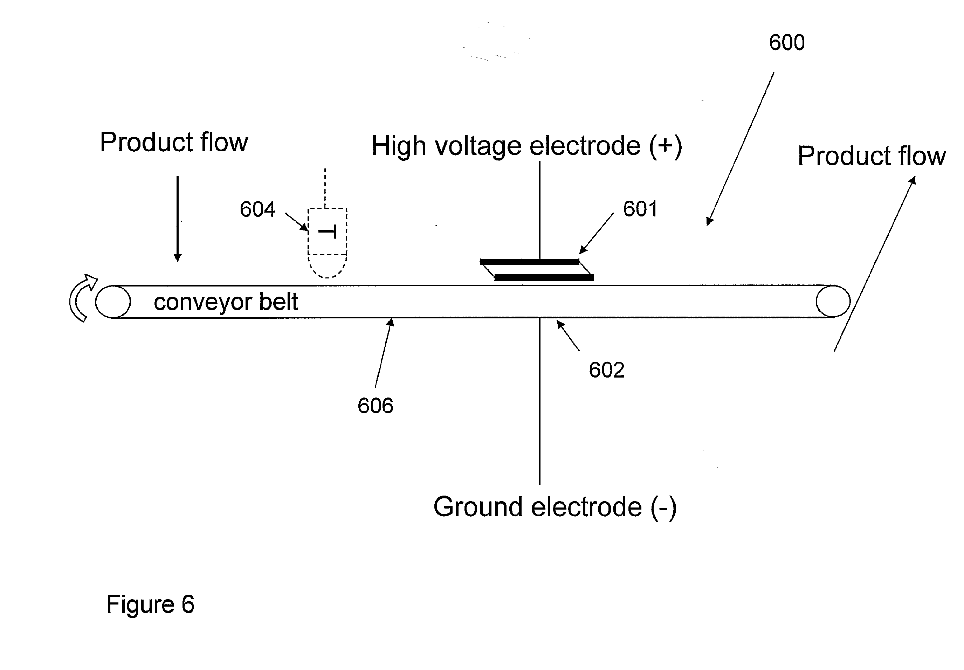

However, the processing chambers disclosed in figures 6, 7 and 8 can process the potatoes, whole or sliced, without water or other suitable liquid, and a separate washing step will be required to extract and remove the molecular substances. Optionally a trigger device 104 may be used in order to control the start of the treatment when a potato to be treated passes the trigger device 104.

In a further embodiment of the invention the electroporation process is not instantaneous but instead a gradual change of the potato under treatment. Potatoes that are under such a treatment may change their conductivity as they gradually change their cellular structure. The electrical conductivity of the potato depends on the number and size of pores. By measuring the conductivity during the treatment process it may be possible to further enhance the control of the treatment, for instance by measuring the conductivity during and/or between each applied voltage pulse. A trigger level may be pre set and when the set trigger level has been reached, the treatment is stopped. In a continuous process of potatoes passing in between the electrodes this may be of advantage since then an optimal number of pulses may be applied instead of a standard number. For instance, potatoes come in a varied assortment of sizes and thus the treatment can be optimized for each potato. The conductivity may be measured through the potato or through the potato and liquid under treatment.

A method according to this can be illustrated by the following steps:
1. Apply an electric field pulse;
2. Measure the conductivity;
3. Check if conductivity trigger level is reached;
4. If the trigger level is not reached, continue with another pulse and so on until the preset conductivity trigger level is reached; and
5. Stopping the treatment when the preset trigger level is reached.

### Example 1

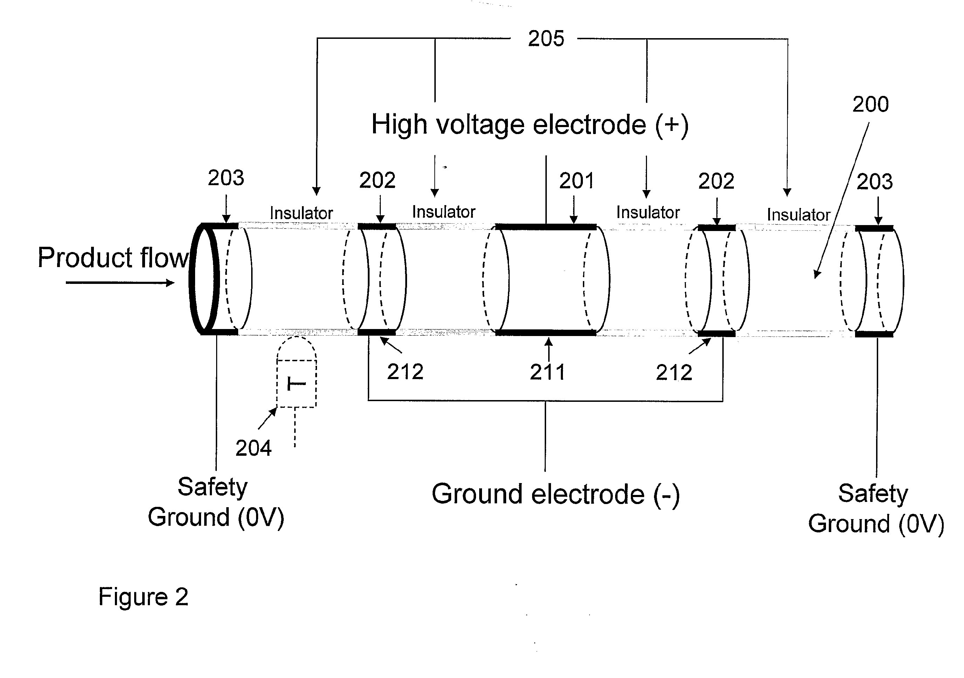

In one embodiment of the present invention a pulse electric field (PEF) treatment chamber (see Figure 2) 200 based on the US Patent 5,690,978 by Yin et al. 1997 with some modifications is used for the potato electroporation process. The electroporation treatment using said (PEF) treatment chamber (200) with the modifications, applied to a potato will be described. The PEF treatment device includes at least two electrodes 201 , 202 for subjecting the potato to an electric field. Each electrode includes a flow chamber 211, 212 for accepting the flow of the potatoes and when an electric field is applied the potatoes are subjected to the electric field and treated according to the present invention.

Electrode material may be of any conductive material, which preferably does not interact chemically with potatoes or other vegetables and/or transport liquid, such as, but not limited to, stainless steel, carbon (graphite) or titanium; however other materials may be used, e.g. aluminium or copper, or alloys or composites of materials.

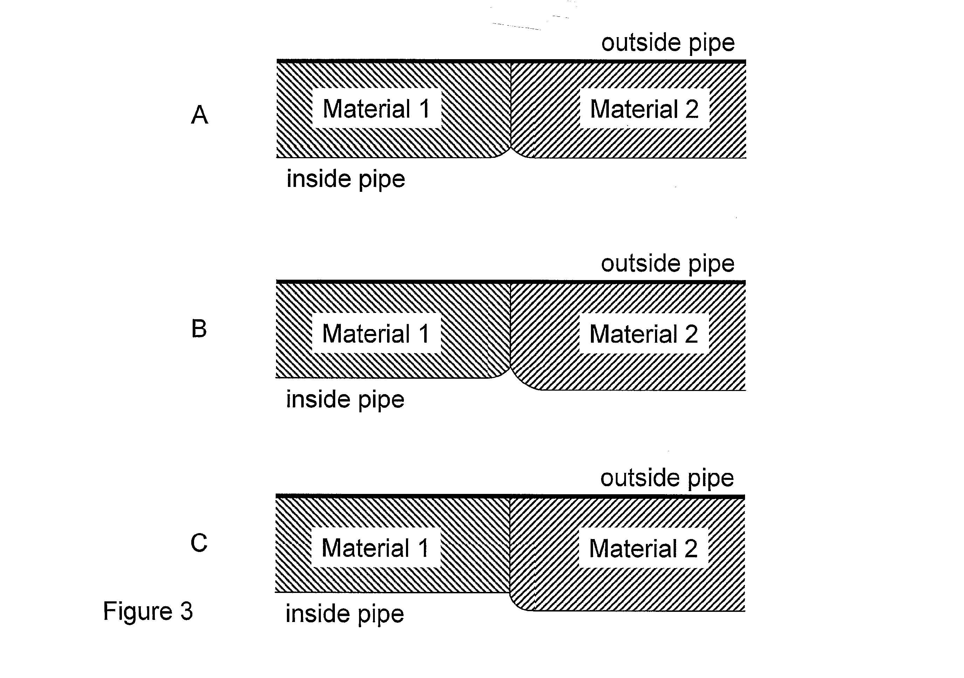

The PEF treatment device also includes at least one insulator 205 positioned between the two (or pluralities of) electrodes 201 , 202. The electrode flow chambers 211, 212 and the insulation flow chambers 205 are configured and positioned so as to form a single tubular shaped flow chamber 200 for accepting the flow of the potatoes, electrically insulating the electrodes 201 , 202 from each other. The electrode and insulation surface inside the treatment chamber will preferably intersect at right angles (90[deg.]) in order to avoid electric field stress, i.e. keeping the electric field more uniformly throughout the chamber. Figure 3A-C depicts such embodiments where material 1 is the electrode and material 2 is the insulator, or vice-versa. The preferred diameter range of the treatment chamber is 1 to 20 cm, more preferably 8 to 13 cm, and most preferably 12 cm in the case of potato treatment, however other dimensions may be suitable when treating other types of plant material. The preferred electrode distance (length of insulator) is 2 to 50 cm, more preferably 10 to 35, and most preferably 24 cm. Two safety ground electrodes 203 have been added upstream and downstream the electrode-insulator tube. This description is intended for, and will also be suitable for, whole potato tubers (peeled or not). The PEF treatment system for electroporation of potatoes also includes a high voltage pulse generator (not shown) for supplying a pulsed electric field.

The present invention provides a method of inducing a pulsed electric field in potatoes for the electroporation treatment. The method includes the steps of transporting the potatoes through the PEF treatment device 200 so as to create a flow of potatoes, one or several at the same time through the device, generating a pulsed electric field, and subjecting the pulsed electric field to the potatoes. The applied electric field is in an ideal shape of, but not limited to, rectangular mono polar pulses of electric fields in a preferred range of 0.2 - 10 kV/cm, more preferably 0.5 - 3.0 kV/cm, and most preferably on the order of 1.2 kV/cm. However, it should be understood by the person skilled in the art that due to practical implications in the electrical setup, the shape will be slightly distorted (e.g. non-rectangular with slightly distorted edges). Other embodiments of this invention may use exponential decay pulses, continuous sinus exposure, in the mono or bipolar form. Each object is subjected to a number of pulses where the number of pulses is preferably from 1 - 500, more preferably 2 - 100, and most preferably 50 with a preferred pulse duration of 2 - 500 microseconds, more preferred duration of 5 - 150 microseconds, and most preferred 10 microseconds, at a preferred pulse repetition rate of 10 - 500 Hz, more preferred 50 - 200 Hz, and most preferred 100 Hz. The total energy delivered to the potato suspension is preferably 0.01 - 5.0 kJ/kg, more preferably 0.1 - 1.0 kJ/kg, and most preferred 0.4 kJ/kg. The conductivity of the water suspension is preferably 0.01 - 0.50 S/m, more preferably 0.02 - 0.08 S/m, and most preferably 0.04 S/m. The ratio of potatoes/potato slices to transporting liquid is preferably in the range of 1:1 - 1 :20, more preferably 1:8 - 1:12, and most preferably 1 :10. This mixture will run through a treatment chamber, part of which is depicted in figure 2. The flow of mixture will be of the order of 1 - 60 tonnes an hour, more preferably 20 - 40, and most preferably 36 tonnes an hour. An approximation of the electric field strength (kV/cm) is given by the applied voltage difference (kV) on the electrodes 201 , 202 divided by the electrode distance (cm). An approximation of the number of pulses is given by dividing the residence time (s) by the pulse repetition rate (1/s). The residence time is given by dividing the electrode distance (cm), times 2 for the setup in figure 2, by the flow velocity (cm/s), which in turn is given by dividing the flow (cm³/s) by the cross-section of the pipe (cm²). Subsequent to the electroporation process the treated potatoes are passed on to an optional blanching step or in the case of whole potatoes to a cutting/slicing step before the washing step.

The voltage difference applied to the two electrodes 201 , 202 is preferably of the order of 0.1 - 50 kV, more preferably 10 - 40 kV, and most preferably 30 kV. However, it should be understood by the person skilled in the art that the voltage difference depends on the distance between electrodes as an electric field strength per unit length of a certain value will be achieved. The pulse generator supplying the pulses is of standard type, as understood by the person skilled in the art and may be commercially available.

Some of these embodiments make use of an optional triggering device 204 detecting the potato about to be treated, and initiates the electroporation process. This triggering device may for instance use mechanical methods, radiation, sound, or electromagnetic based detection (e.g. optics, microwaves, and inductive sensors) to detect the potatoes or it may sense the presence of the potato between the electrodes as a change in electrical properties (e.g. conductance, capacitance) in the vicinity of the triggering device. The electrical properties may be measured with a separate device for measuring electrical properties or the electrodes 201, 202 may be used for the same purpose.

### Example 2

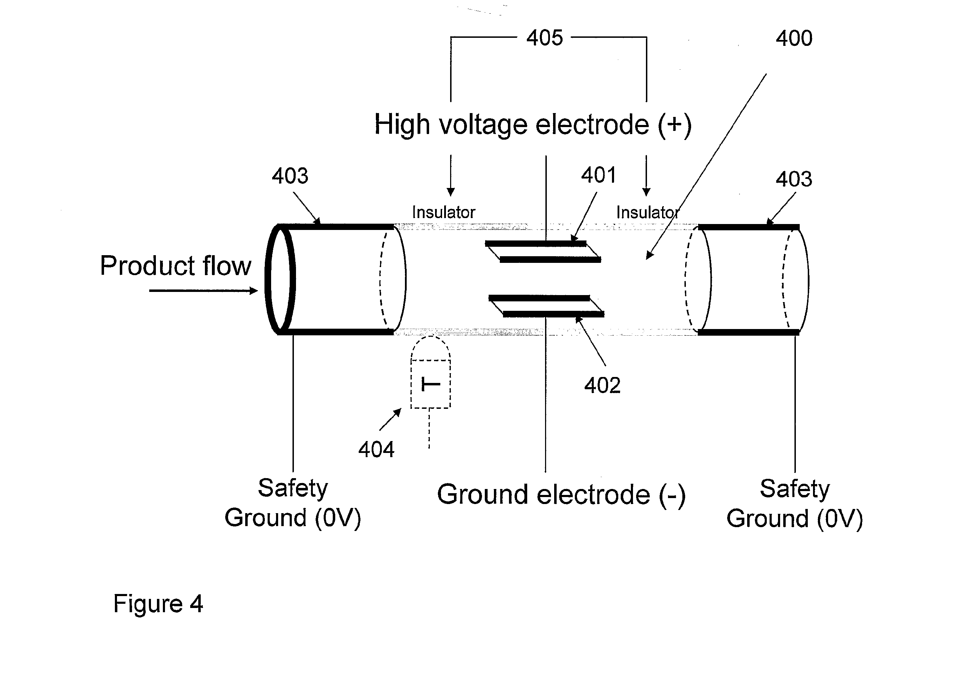

Another embodiment of the present invention is depicted in Figure 4. In this embodiment the electrodes 401 , 402 may be mounted in, or close to, the insulating pipe wall and be of any shape. The treatment chamber 400 may have an oval or rectangular cross- section at the place of and/or near the electrodes. The preferred design have parallel rectangular electrodes 401 , 402, e.g. with rounded edges, mounted vertically inside and close to the pipe wall, with a preferred electrode distance of 1-30 cm, more preferred 5- 15, and most preferred 12 cm. Insulator 405 is provided and an optional triggering device 404 is also provided. Again safety ground electrodes 403 are provided at the respective ends of the treatment chamber 400. The transport and treatment process of the potatoes is the same as described for the embodiment in Example 1.

### Example 3

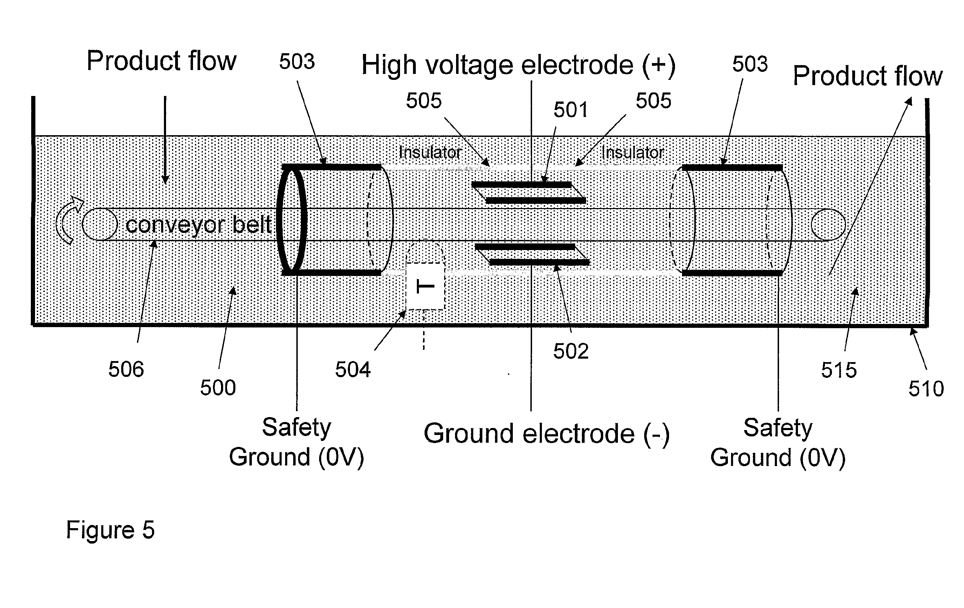

Figure 5 illustrates an embodiment of the invention which is slightly modified compared to the one in Example 2 in that a conveyor belt 506 submerged in liquid (e.g. water) 515, is responsible for transporting the potato through the treatment chamber 500. Alternatively with a suitable orientation of the treatment chamber 500, gravity can transport the potato through treatment chamber 500. An insulator 505 and an optional triggering device 504 is also provided. Again safety ground electrodes 503 are provided at the respective ends of the treatment chamber 500. The treatment process of the potatoes is the same as described for the embodiment in Example 1.

### Example 4

In one further embodiment illustrated in Figure 6 the treatment device 600 is made of one top mounted high voltage electrode 601 (may be an electrically conductive conveyor belt mounted upside down) and an electrically conductive conveyor belt serving as a ground electrode 602. Only pieces of potatoes and with no added water are treated. In this embodiment both electrodes 601 , 602 are in contact with the preferably whole and peeled potatoes before slicing. The treatment process of the potatoes is the same as described for the embodiment in Example 1 , except that the potato pieces after the electroporation process will proceed to a device arranged to provide the washing step (not shown).

### Example 5

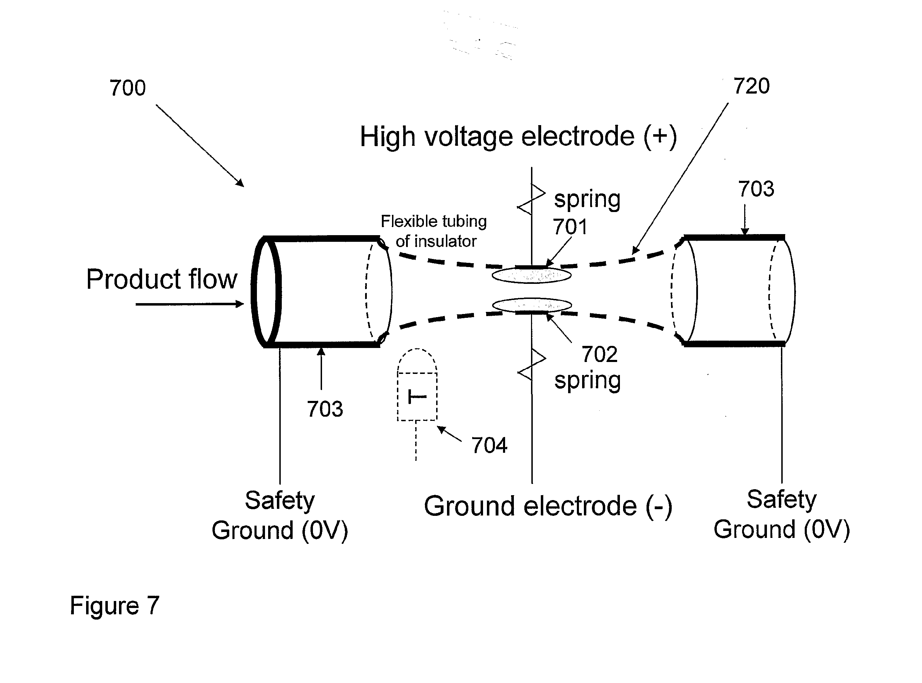

In a further embodiment of the invention the insulated treatment chamber described in Example 2 is made water penetrable and flexible in diameter by for instance being made of a nylon mesh 720 (Figure 7). The electrodes 701 , 702 are part of the flexible treatment chamber 700 and made for instance of a wire mesh. This configuration is intended for treating whole or large pieces of potatoes, peeled or unpeeled, with or without water. Again safety ground electrodes 703 are provided at the respective ends of the treatment chamber 700.The transport and treatment process of the potatoes is the same as described for the embodiment in Example 1. If the electroporation treatment is performed without added liquid the treated potatoes will proceed to a device arranged to provide the washing step (not shown).

### Example 6

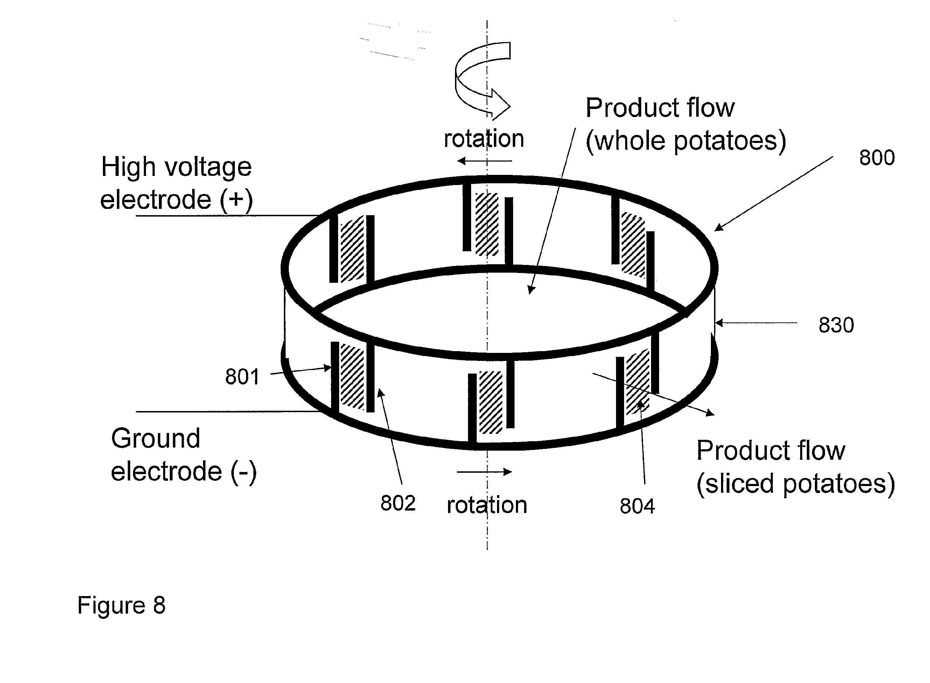

In one embodiment of the invention whole peeled potatoes are sliced for potato chips manufacturing during the electroporation process (Figure 8). The treatment chamber 800 is a modified rotating drum 830 often used in the potato chip industry to slice the potatoes. The rotating drum 830 is fed with raw, peeled, whole potatoes into the central portion of the drum, where the potatoes are forced toward the edge due to the rotation of the drum and subsequently forced to pass the knife section cutting and/or slicing the potatoes which emerge on the outside of the drum. The modification is mainly having the cutting knifes 801 , 802 also serve as electrodes set at an electric potential different from the opposing surface on the other side of the space where the cut potato slices emerge. The spaces 804 in between the electrodes are hatched in this figure and represent the area where the sliced potatoes emerge while treated by electric fields. If the electroporation treatment is performed without added liquid the treated potatoes will proceed to a device arranged to provide the washing step (not shown).

The modifications involve for instance insulation of the high voltage electrodes and wiring. The applied voltage will be much less than previously indicated, preferably about 200 - 10 000 V, more preferably 380 - 1 000 V, and most preferably 600 V. The electric field strength will remain on the same order as previously described. The pulse repetition rate will be slightly higher and the number of pulses will be slightly less; preferably 1-200 pulses, more preferably 2-50 pulses, and most preferably 10 pulses. It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be implemented by means of both hardware and software, and that several "means" may be represented by the same item of hardware.

## Claims

1. A process for treating potatoes, comprising the steps of:
- applying an electric field (102) in the form of a pulsed electric field to the potatoes, such that pores are created in the cell membranes of the potatoes, enhancing the rate of mass transfer of reducing sugars from said potatoes, keeping large molecules such as starch on the inside of the cells, while smaller molecules such as reducing sugars, diffuse through the enlarged pores and easily be washed off in a subsequent washing step (103), wherein the pulses applied are in the range of 0.2 to 10 kV/cm, and the number of pulses applied is from 1 - 500, and the duration of the pulses applied is 2 - 500 microseconds, and the repetition rate for the applied pulses is 10 - 500 Hz, and
- removing said reducing sugars from the potatoes by washing in a liquid at low temperatures,
wherein the liquid in the washing step (103) is water or solution of salt in water, and wherein the temperature of the liquid in the washing step (103) is below 70°C.

2. The process according to claim 1, wherein the applied electric field (102) is a pulsed electric field in the form of rectangular or exponential pulses.

3. The process according to Claim 1, wherein the applied electric field (102) is a pulsed electric field in the form of monopolar or bipolar pulses.

4. The process according to any of Claims 1 to 3 wherein the pulses are in a range of 0.5 - 3.0 kV/cm, preferably in the order of 1.2 kV/cm.

5. The process according to any of Claims 1 to 3, wherein the number of pulses applied is from 2-100, preferably 50.

6. The process according to any one of Claims 1 to 3, wherein the duration for the pulses applied is 5-150 microseconds, preferably 10 microseconds.

7. The process according to any one of Claims 1 to 3, wherein the repetition rate for the applied pulses is 50 - 500 Hz, preferably 100 Hz.

8. The process according to any one of Claims 1 to 4, wherein the total energy applied by the pulses is 0.01 - 5.0 kJ/kg, preferably 0.1-1.0 kJ/kg and more preferably 0.4 kJ/kg.

9. The process according to any one of Claims 1 to 4, wherein the electric field strength applied on the two electrodes (201, 202, 401, 402, 501, 502, 601, 602, 701, 702, 801 , 802) is of the order of 0.2 - 10 kV/cm, preferably 0.5 - 3.0 kV/cm, and more preferably of the order of 1.2 kV/cm

10. The process according to any one of Claims 1 to 4, wherein the potatoes being in the form of a suspension comprising sliced or whole potatoes in water or other suitable liquid and the ratio of potatoes/potato slices to liquid being treated is in the range of 1:1-1:20, preferably 1:8-1:12, most preferably in the range of 1 :10.

11. The process according to claim 1, wherein the potatoes being in the form of a suspension comprising sliced or whole potatoes in water or other suitable liquid and the flow of potatoes/potato slices to liquid going through the treatment chamber (200, 400, 500, 700, 800) is in the range of 1 to 60 tonnes an hour, preferably 20 to 40 tonnes an hour, more preferably 36 tonnes an hour.

12. The process according to claim 1, wherein the temperature of the liquid in the washing step (103) is below 60°C, more preferably below 46°C.

13. The process according to claim 1, wherein the duration of the washing step (103) is less than 30 minutes, preferably less than 10 minutes, more preferably less than 5 minutes.

14. The process according to claim 1, further comprising enhancing the rate of mass transfer of the sugars by supplying an enzyme enhancing substance.

15. The process according to claim 14, wherein the enzyme enhancing substance is ions, such as calcium ions.

## Patentansprüche

1. Verfahren zum Behandeln von Kartoffeln, umfassend die Schritte:
- Anwenden eines elektrischen Feldes (102) in der Form eines gepulsten elektrischen Feldes auf die Kartoffeln, derart, dass Poren in den Zellmembranen der Kartoffeln entstehen, um die Rate des Stofftransports von reduzierenden Zuckern aus den Kartoffeln zu verstärken, um größere Moleküle wie Stärke auf der Innenseite der Zellen zu belassen, während kleiner Moleküle wie reduzierende Zucker durch die vergrößerten Poren diffundieren und auf einfache Weise in einem nachfolgenden Waschschritt (103) ausgewaschen werden können, wobei die angewendeten Pulse in dem Bereich von 0,2 bis 10 kV/cm sind, und die Anzahl der angewendeten Pulse von 1 - 500 ist, und die Dauer der angewendeten Pulse 2 - 500 Mikrosekunden ist, und die Wiederholungsrate der angewendeten Pulse 10 - 500 Hz ist, und
- Entfernen der reduzierenden Zucker aus den Kartoffeln mittels Waschen in einer Flüssigkeit bei niedrigen Temperaturen,
wobei die Flüssigkeit des Waschschrittes (103) Wasser oder eine Lösung von Salz in Wasser ist, und wobei die Temperatur der Flüssigkeit in dem Waschschritt (103) unterhalb von 70°C ist.

2. Verfahren gemäß Anspruch 1, wobei das angewendete elektrische Feld (102) ein gepulstes elektrisches Feld in Form von rechteckigen oder exponentiellen Pulsen ist.

3. Verfahren gemäß Anspruch 1, wobei das angewendete elektrische Feld (102) ein gepulstes elektrisches Feld in Form von monopolaren oder bipolaren Pulsen ist.

4. Verfahren gemäß irgendeinem der Ansprüche 1 bis 3, wobei die Pulse in einem Bereich von 0,5 - 3.0 kV/cm sind, vorzugsweise den Wert von 1,2 kV/cm aufweisen.

5. Verfahren gemäß irgendeinem der Ansprüche 1 bis 3, wobei die Zahl der angewendeten Pulse von 2 - 100, vorzugsweise 50 ist.

6. Verfahren gemäß irgendeinem der Ansprüche 1 bis 3, wobei die Dauer der angewendeten Pulse 5 - 50 Mikrosekimden, vorzugsweise 10 Mikrosekunden ist.

7. Verfahren gemäß irgendeinem der Ansprüche 1 bis 3, wobei die Wiederholungsrate für die angewendeten Pulse 50 - 500 Hz, vorzugsweise 100 Hz ist.

8. Verfahren gemäß irgendeinem der Ansprüche 1 bis 4, wobei die angewendete Totalenergie durch die Pulse 0,01 - 5,0 kJ/kg, vorzugsweise 0,1 - 1,0 kJ/kg und bevorzugterweise 0,4 KJ/kg ist.

9. Verfahren gemäß irgendeinem der Ansprüche 1 bis 4, wobei die angewendete elektrische Feldstärke auf die beiden Elektroden (201, 202, 401, 402, 501, 502, 601, 602, 701, 702, 801, 802) in der Größenordnung von 0,2 - 10 kV/cm, vorzugsweise 0,5 - 3,0 kV/cm, und besonders bevorzugt in der Größenordnung von 1,2 kV/cm ist.

10. Verfahren gemäß irgendeinem der Ansprüche 1 bis 4, wobei die Kartoffeln in der Form einer Suspension vorliegen, enthaltend geschnittene oder ganze Kartoffeln in Wasser oder einer geeigneten Flüssigkeit und wobei das Verhältnis von Kartoffeln/Kartoffelscheiben zur Flüssigkeit, die behandelt wird, in dem Bereich von 1:1 - 1:20, vorzugsweise 1:8 - 1:12, besonders bevorzugt im Bereich von 1:10 ist.

11. Verfahren gemäß Anspruch 1, wobei die Kartoffeln in Form einer Suspension vorliegen, umfassend geschnittene oder ganze Kartoffeln in Wasser oder in einer anderen geeigneten Flüssigkeit und wobei der Fluss der Kartoffeln/Kartoffelscheiben zur Flüssigkeit, der durch die Behandlungskammer (200, 400, 500, 700, 800) geht, in dem Bereich von 1 bis 60 Tonnen in einer Stunde, vorzugsweise 20 bis 40 Tonnen in einer Stunde, besonders bevorzugt 36 Tonnen in einer Stunde ist.

12. Verfahren gemäß Anspruch 1, wobei die Temperatur der Flüssigkeit im Waschschritt unterhalb von 60°C, besonders bevorzugt unterhalb 46°C liegt.

13. Verfahren gemäß Anspruch 1, wobei die Dauer des Waschschrittes (103) weniger als 30 Minuten beträgt, vorzugsweise weniger als 10 Minuten, besonders bevorzugt weniger als 5 Minuten beträgt.

14. Verfahren gemäß Anspruch 1, weiter enthaltend verstärken der Rate des Stofftransfers der Zucker durch Zufuhr einer enzymverstärkenden Substanz.

15. Verfahren gemäß Anspruch 14, wobei die enzymverstärkende Substanz Ionen sind wie Kalziumionen.

## Revendications

1. Procédé pour traiter des pommes de terre, comprenant les étapes suivantes :
- l'application d'un champ électrique (102) sous la forme d'un champ électrique pulsé aux pommes de terre de manière à ce que des pores soient créés dans les membranes cellulaires des pommes de terre, en améliorant le taux de transfert de masse de sucres réducteurs desdites pommes de terre, en conservant de grandes molécules, telles de l'amidon, à l'intérieur des cellules alors que des molécules plus petites, telles des sucres réducteurs, se diffusent à travers les pores agrandis et sont facilement lavées au cours d'une étape subséquente de lavage (103),
dans lequel les impulsions appliquées se situent dans la plage de 0,2 à 10 kV/cm,
et le nombre d'impulsions appliquées étant de 1 - 500, et
la durée des impulsions appliquées étant de 2 - 500 microsecondes, et
le taux de répétition pour les impulsions appliquées étant de 10 - 500 Hz, et
- le retrait dédits sucres réducteurs des pommes de terre grâce au lavage dans un liquide à basses températures,
dans lequel le liquide de l'étape de lavage (103) est de l'eau ou une solution de sel dans de l'eau, et dans lequel la température du liquide de l'étape de lavage (103) est inférieure à 70 °C.

2. Procédé selon la revendication 1, dans lequel le champ électrique appliqué (102) est un champ électrique pulsé sous la forme d'impulsions rectangulaires ou exponentielles.

3. Procédé selon la revendication 1, dans lequel le champ électrique (102) appliqué est un champ électrique pulsé sous la forme d'impulsions monopolaires ou bipolaires.

4. Procédé selon l'une quelconque des revendications 1 à 3, dans lequel les impulsions sont dans une plage de 0,5 - 3,0 kV/cm, de préférence de l'ordre de 1,2 kV/cm.

5. Procédé selon l'une quelconque des revendications 1 à 3, dans lequel le nombre d'impulsions appliquées est de 2 - 100, de préférence de 50.

6. Procédé selon l'une quelconque des revendications 1 à 3, dans lequel la durée des impulsions appliquées est de 5 - 150 microsecondes, de préférence de 10 microsecondes.

7. Procédé selon l'une quelconque des revendications 1 à 3, dans lequel le taux de répétition pour les impulsions appliquées est de 50 - 500 Hz, de préférence de 100 Hz.

8. Procédé selon l'une quelconque des revendications 1 à 4, dans lequel l'énergie totale appliquée par les impulsions est de 0,01 - 5,0 kJ/kg, de préférence de 0,1 - 1,0 kJ/kg, et de manière davantage préférée, de 0,4 kJ/kg.

9. Procédé selon l'une quelconque des revendications 1 à 4, dans lequel la puissance du champ électrique appliqué aux deux électrodes (201, 202, 401, 402, 501, 502, 601, 602, 701, 702, 801, 802) est de l'ordre de 0,2 - 10 kV/cm, de préférence de 0,5 - 3,0 kV/cm, et de manière davantage préférée, de l'ordre de 1,2 kV/cm.

10. Procédé selon l'une quelconque des revendications 1 à 4, dans lequel les pommes de terre se trouvent sous la forme d'une suspension comprenant des pommes de terre en tranches ou entières dans de l'eau ou un autre liquide adéquat, et le rapport entre les pommes de terre/tranches de pommes de terre et le liquide traité se situant dans la plage de 1:1 - 1:20, de préférence de 1:8 - 1:12, de manière davantage préférée, dans la plage de 1:10.

11. Procédé selon la revendication 1, dans lequel les pommes de terre se trouvent sous la forme d'une suspension comprenant des pommes de terre tranchées ou entières dans de l'eau ou un autre liquide adéquat et le flot de pommes de terre/tranches de pommes de terre par rapport au liquide passant à travers la chambre de traitement (200, 400, 500, 700, 800) étant dans la plage de 1 à 60 tonnes par heure, de préférence de 20 à 40 tonnes par heure, de manière davantage préférée, de 36 tonnes par heure.

12. Procédé selon la revendication 1, dans lequel la température du liquide dans l'étape de lavage (103) est inférieure à 60 °C, de manière davantage préférée, inférieure à 46 °C.

13. Procédé selon la revendication 1, dans lequel la durée de l'étape de lavage (103) est de moins de 30 minutes, de préférence de moins de 10 minutes, de manière davantage préférée, de moins de 5 minutes.

14. Procédé selon la revendication 1, comprenant en outre l'amélioration du taux de transfert de masse des sucres en fournissant une substance d'amélioration d'enzymes.

15. Procédé selon la revendication 14, dans lequel la substance d'amélioration d'enzymes est des ions, tels des ions de calcium.
